# EUROPEAN PATENT APPLICATION

(11) **EP 3 989 314 A1**
(43) Date of publication of application: **27.04.2022**
(21) Application number: 20849082.1
(22) Date of filing: 31.07.2020
(51) Int. Cl.: H01M 4/131, H01M 4/136, H01M 10/0525

(54) **POSITIVE ELECTRODE PLATE, AND LITHIUM ION BATTERY AND DEVICE ASSOCIATED THEREWITH**

(30) Priority: 08.08.2019 CN 201910728944
(71) Applicant: Contemporary Amperex Technology Co., Limited, Fujian PRC 352100 (CN)
(72) Inventor: LI, Xing, Ningde, Fujian 352100 (CN); WANG, Yaohui, Ningde, Fujian 352100 (CN); JIN, Haizu, Ningde, Fujian 352100 (CN)
(74) Representative: Gerauer, Marc Philippé
(86) International application number: PCT/CN2020/106476
(87) International publication number: WO 2021/023138

(57) **Abstract**

This application provides a positive electrode plate and a lithium-ion battery and apparatus related thereto. The positive electrode plate includes a positive electrode current collector, a first positive electrode membrane, and a second positive electrode membrane. The first positive electrode membrane is arranged on the positive electrode current collector and includes a first positive electrode active material, and the first positive electrode active material is selected from one or more of phosphate materials LiFe_{1-x-y}MnₓM_{y}PO₄, where 0≤x≤1, 0≤y≤0.1, 0≤x+y≤1, and M is selected from one or more of Cr, Mg, Ti, Al, Zn, W, Nb, or Zr. The second positive electrode membrane is arranged on the first positive electrode membrane and includes a second positive electrode active material, gram capacity of the second positive electrode active material is greater than gram capacity of the first positive electrode active material, and the second positive electrode active material is different from the first positive electrode active material. Thickness DO of the positive electrode current collector is less than or equal to thickness D1 of the first positive electrode membrane. The positive electrode plate can allow the lithium-ion battery to have not only high energy density but also good nail penetration safety performance.

## Description

This application claims priority to Chinese Patent Application No. 201910728944.3, filed with the China National Intellectual Property Administration on August 8, 2019 and entitled "POSITIVE ELECTRODE PLATE AND LITHIUM-ION BATTERY", which is incorporated herein by reference in its entirety.

### TECHNICAL FIELD

This application relates to the battery technology field, and in particular, to a positive electrode plate and a lithium-ion battery and apparatus related thereto.

### BACKGROUND

As their energy density is further improved and costs further reduced, lithium-ion batteries are applied in wider fields, especially in the fields of electric vehicles and energy storage, and people have great expectations for them. However, for lithium-ion batteries with high energy density, safety performance is currently one of main bottlenecks restricting the expansion of their application. When being abused, lithium-ion batteries in lack of adequate safety design may suffer thermal runaway, resulting in, for example, smoke, burning or even explosion, leaving people's life and property in danger. Generally, capacity of batteries for electric vehicles and energy storage may be up to dozens or even hundreds of ampere hours, much higher than that of batteries for consumer electronic products. Also, such batteries are used in more complicated conditions than consumer electronics products. Therefore, the safety performance of the batteries is much more crucial, even considered as a technical bottleneck hindering large-scale application of the batteries.

Lithium-ion batteries using a ternary material as a positive electrode active material are characterized by high energy density. However, stability of ternary materials is usually poor, and when nail penetration safety performance is tested, short circuit may occur at a penetrated site of the battery and a local warm region may be formed. When the temperature exceeds a critical point, the battery will suffer thermal runaway and fail to meet the standards for safe use.

Chinese Application CN103378352A, filed on April 25, 2012, discloses that a coating layer of lithium iron phosphate applied on a positive electrode current collector in advance improves abilities of lithium nickel cobalt manganate batteries, lithium manganate oxide batteries, or lithium cobaltate batteries to prevent over-discharge, making their service life longer. However, that solution fails to provide assurance for the nail penetration safety performance of batteries, and cannot make the batteries truly up to the standards for safe use.

### SUMMARY

In view of the problems described in the background, an objective of this application is to provide a positive electrode plate and a lithium-ion battery and apparatus related thereto, where the positive electrode plate can allow the lithium-ion battery to have not only high energy density but also good nail penetration safety performance.

To achieve the above objective, according to a first aspect of this application, this application provides a positive electrode plate including a positive electrode current collector, a first positive electrode membrane, and a second positive electrode membrane. The first positive electrode membrane is arranged on the positive electrode current collector and includes a first positive electrode active material, and the first positive electrode active material is selected from one or more of phosphate materials LiFe_{1-x-y}MnₓM_{y}PO₄, where 0≤x≤1, 0≤y≤0.1, 0≤x+y≤1, and M is selected from one or more of Cr, Mg, Ti, Al, Zn, W, Nb, or Zr. The second positive electrode membrane is arranged on the first positive electrode membrane and includes a second positive electrode active material, gram capacity of the second positive electrode active material is greater than gram capacity of the first positive electrode active material, and the second positive electrode active material is different from the first positive electrode active material. Thickness DO of the positive electrode current collector is less than or equal to thickness D1 of the first positive electrode membrane.

According to a second aspect of the present invention, this application provides a lithium-ion battery, where the lithium-ion battery includes the positive electrode plate according to the first aspect of this application.

According to a third aspect of this application, this application provides an apparatus, where a power source or storage source of the apparatus is the lithium-ion battery in the second aspect of this application.

This application includes at least the following beneficial effects.

The positive electrode plate of this application includes two layers of positive electrode membranes. The first positive electrode active material in the first positive electrode membrane is a phosphate material with high stability, and the gram capacity of the second positive electrode active material in the second positive electrode membrane is greater than the gram capacity of the first positive electrode active material. The second positive electrode membrane can ensure high energy density of the lithium-ion battery. The first positive electrode membrane is in direct contact with the positive electrode current collector and provides benefits in two aspects. In one aspect, the first positive electrode membrane can effectively prevent contact between the positive electrode current collector and the second positive electrode active material with high gram capacity in nail penetration process, relieving embrittlement effect of the second positive electrode active material with strong alkalinity on the positive electrode current collector, and reducing metal fins resulting from nail penetration. In another aspect, the first positive electrode membrane can prevent contact between the few metal fins resulting from nail penetration and the negative electrode active material. As such, the first positive electrode membrane can ensure avoidance of contact between the positive electrode current collector and the negative electrode membrane of the lithium-ion battery during nail penetration so as to prevent severe thermal runaway from occurring due to internal short circuit as a result of such contact. In addition, the thickness of the positive electrode current collector is less than or equal to the thickness of the first positive electrode membrane, helping to effectively prevent contact between the metal fins resulting from nail penetration and the negative electrode membrane.

The apparatus in this application includes the lithium-ion battery provided by this application, and therefore has at least the same advantages as the lithium-ion battery in this application.

### BRIEF DESCRIPTION OF DRAWINGS

To describe the technical solutions in the embodiments of this application more clearly, the following briefly describes the accompanying drawings required for describing the embodiments in this application. Apparently, the accompanying drawings in the following description show merely some embodiments of this application, and a person of ordinary skill in the art may still derive other drawings from these accompanying drawings without creative efforts.
FIG. 1 is a schematic diagram of an embodiment of a lithium-ion battery;
FIG. 2 is an exploded view of FIG. 1;
FIG. 3 is a schematic diagram of an embodiment of a battery module;
FIG. 4 is a schematic diagram of an embodiment of a battery pack;
FIG. 5 is an exploded view of FIG. 4; and
FIG. 6 is a schematic diagram of an embodiment of an apparatus using a lithium-ion battery as a power source.

### DESCRIPTION OF EMBODIMENTS

The following describes in detail the positive electrode plate and the lithium-ion battery of this application.

First described is a positive electrode plate according to a first aspect of this application.

The positive electrode plate according to the first aspect of this application includes a positive electrode current collector, a first positive electrode membrane, and a second positive electrode membrane. The first positive electrode membrane is arranged on the positive electrode current collector and includes a first positive electrode active material, and the first positive electrode active material is selected from one or more of phosphate materials LiFe_{1-x-y}MnₓM_{y}PO₄, where 0≤x≤1, 0≤y≤0.1, 0≤x+y≤1, and M is selected from one or more of Cr, Mg, Ti, Al, Zn, W, Nb, or Zr; and the second positive electrode membrane is arranged on the first positive electrode membrane and includes a second positive electrode active material, gram capacity of the second positive electrode active material is higher than gram capacity of the first positive electrode active material, and the second positive electrode active material is different from the first positive electrode active material.

The first positive electrode membrane is arranged on one or two surfaces of the positive electrode current collector. Optionally, the first positive electrode membrane is arranged on two surfaces of the positive electrode current collector.

In the positive electrode plate according to the first aspect of this application, the second positive electrode active material is selected from one or more of lithium manganate oxide, lithium-rich manganese-based materials, or ternary materials Li₁₊ₘNiₐCo_{b}Me_{1-a-b}O₂₋ₙQₙ, where -0.1≤m≤0.2, 0<a<1, 0<b<1, 0<1-a-b<1, 0≤n≤0.1, Me is selected from one or more of Mn, Al, Mg, Zn, Ga, Ba, Fe, Cr, Sn, V, Sc, Ti, Zr, Sb, W, or Mo, and Q is selected from one or more of F, Cl, or S.

Energy density and nail penetration safety performance of a lithium-ion battery are closely related to the type of the positive electrode active material and properties of the positive electrode current collector. Lithium manganate oxide, lithium-rich manganese-based materials, and ternary materials have high gram capacity in nature, and can significantly increase the energy density of the lithium-ion battery when used as a positive electrode active material. However, these materials are usually alkaline, and they are extremely likely to make the positive electrode current collector brittle when in direct contact with the positive electrode current collector. Therefore, in a nail penetration process, the lithium-ion battery may have more metal fins at which a large amount of joule heat may be generated due to short circuit to form a local warm region. When temperature of the warm region exceeds a critical point of the lithium-ion battery, the lithium-ion battery may suffer thermal runaway, resulting in smoke, burning, or even explosion.

Short circuit inside the lithium-ion battery is mainly in four forms: short circuit caused by contact between the positive electrode current collector and a negative electrode current collector, short circuit caused by contact between the positive electrode current collector and a negative electrode membrane, short circuit caused by contact between the positive electrode membrane and the negative electrode membrane, and short circuit caused by contact between the positive electrode membrane and the negative electrode current collector. The most dangerous one is the short circuit caused by contact between the positive electrode current collector and the negative electrode membrane, because resistance is smaller and current is stronger in this case, generating a rather high thermal power while heat conduction and heat dissipation are relatively slow. In addition, the negative electrode active material has high activity. Therefore, it is easy to cause a series of subsequent electrical and chemical reactions, which may lead to safety accidents. In addition, as gram capacity of the positive electrode active material increases, thermal stability of the material decreases, which is especially obvious in the case of high-nickel materials. As a result, the thermal runaway critical temperature of the lithium-ion battery may decline, further worsening the safety performance of the lithium-ion battery.

Although phosphate materials have lower gram capacity than lithium manganate oxide, lithium-rich manganese-based materials, and ternary materials, the phosphate materials have advantages such as rich resources, low price, environmental friendliness, and stable discharge voltage. In addition, the phosphate materials have high stability, and as a positive electrode active material, do not make the positive electrode current collector brittle when in direct contact with the positive electrode current collector. Therefore, in a nail penetration process, the lithium-ion battery may not have excessive metal fins, reducing the occurrence of thermal runaway resulting from internal short circuit caused by the contact between the positive electrode current collector and the negative electrode membrane of the lithium-ion battery, making the lithium-ion battery have better nail penetration safety performance.

Comprehensively considering the energy density and safety performance of the lithium-ion battery, the positive electrode plate of this application includes two layers of positive electrode membranes, that is, the first positive electrode membrane in direct contact with the positive electrode current collector and the second positive electrode membrane arranged on the first positive electrode membrane. The first positive electrode active material in the first positive electrode membrane is a phosphate material with high stability, and the second positive electrode active material in the second positive electrode membrane is lithium manganate oxide, lithium-rich manganese-based material, or ternary material with high gram capacity. The second positive electrode membrane can ensure high energy density of the lithium-ion battery, thereby meeting actual requirements for use. The first positive electrode membrane is in direct contact with the positive electrode current collector and provides benefits in two aspects. In one aspect, the first positive electrode membrane can effectively prevent contact between the positive electrode current collector and the second positive electrode active material with high gram capacity in nail penetration, relieving the embrittlement effect of the second positive electrode active material with strong alkalinity on the positive electrode current collector, and reducing metal fins resulting from nail penetration. In another aspect, the first positive electrode membrane can prevent contact between the few metal fins resulting from nail penetration and the negative electrode active material. As such, the first positive electrode membrane can ensure avoidance of contact between the positive electrode current collector and the negative electrode membrane of the lithium-ion battery during nail penetration so as to prevent severe thermal runaway from occurring due to internal short circuit as a result of such contact. Therefore, the positive electrode plate in this application can allow the lithium-ion battery to have not only high energy density but also good nail penetration safety performance.

In the positive electrode plate according to the first aspect of this application, thickness DO of the positive electrode current collector is less than or equal to thickness D1 of the first positive electrode membrane. In a case that the thickness of the first positive electrode membrane is excessively small, smaller that the thickness of the positive electrode current collector, the first positive electrode membrane cannot effectively prevent the contact between metal fins resulting from nail penetration and the negative electrode membrane, thus failing to effectively improve the nail penetration safety performance of the lithium-ion battery. Optionally, the thickness D1 of the first positive electrode membrane is greater than the thickness DO of the positive electrode current collector.

In the positive electrode plate according to the first aspect of this application, optionally, the thickness D1 of the first positive electrode membrane satisfies 6µm≤D1≤21µm.

In the positive electrode plate according to the first aspect of this application, optionally, thickness D2 of the second positive electrode membrane satisfies 50µm≤D2≤200µm.

It should be noted that the thickness of the first positive electrode membrane and the thickness of the second positive electrode membrane in this application mean the thickness of the first positive electrode membrane and the thickness of the second positive electrode membrane that are in the whole positive electrode plate, which means that both a front side and a back side of the positive electrode plate are included.

In the positive electrode plate according to the first aspect of this application, a thicker first positive electrode membrane means better safety performance of the lithium-ion battery, but correspondingly greater impact on the energy density of the lithium-ion battery. In order to ensure the nail penetration safety performance of the lithium-ion battery without affecting the energy density of the lithium-ion battery, optionally, the thickness D1 of the first positive electrode membrane and the thickness D2 of the second positive electrode membrane satisfy a relationship: 70µm≤D2-D1≤170µm.

In the positive electrode plate according to the first aspect of this application, the performance of the positive electrode current collector is closely related to the nail penetration performance of the lithium-ion battery. A thinner positive electrode current collector means smaller metal fins resulting from nail penetration on the positive electrode current collector, and better helps to improve the nail penetration safety performance of the lithium-ion battery. However, in a case of an excessively small thickness of the positive electrode current collector, the positive electrode plate may be at risk of breaking during production, leading to a failed production.

Optionally, the thickness D0 of the positive electrode current collector satisfies 5µm≤D0≤20µm.

In the positive electrode plate according to the first aspect of this application, an elongation at break of the positive electrode current collector may also have an impact on the nail penetration safety performance of the lithium-ion battery. In a case of an excessively large elongation at break of the positive electrode current collector, relatively large metal fins may be present on the positive electrode current collector as a result of nail penetration, which is not conducive to improving the nail penetration safety performance of the lithium-ion battery. In a case of an excessively small elongation at break of the positive electrode current collector, ductility of the positive electrode current collector is difficult to meet a processing requirement. The positive electrode current collector may break during processing of the positive electrode plate or during charge/discharge of the lithium-ion battery, which is not conductive to the processing and production of the positive electrode plate and practical use of the lithium-ion battery. The elongation at break of the positive electrode current collector of this application is tested according to GB/T228-2008 *Metallic Materials Tensile Testing at Ambient Temperature.*

Optionally, the elongation at break 8 of the positive electrode current collector satisfies 0.8%≤δ≤4%.

In the positive electrode plate according to the first aspect of this application, as the positive electrode current collector has ductility, metal fins on the positive electrode current collector resulting from nail penetration also have ductility. If the metal fins are in contact with the negative electrode membrane, a short circuit may occur inside the battery to cause thermal runaway, deteriorating the nail penetration safety performance of the lithium-ion battery.

Optionally, the thickness D0 of the positive electrode current collector and the thickness D1 of the first positive electrode membrane satisfy a relationship: D1≥(1+δ)×D0. Metal fins on the positive electrode current collector resulting from nail penetration can thus be prevented from contact with the negative electrode membrane. In this case, length of the metal fins on the positive electrode current collector resulting from nail penetration is not greater than the thickness of the first positive electrode membrane, making the lithium-ion battery have better nail penetration safety performance.

In the positive electrode plate according to the first aspect of this application, the positive electrode current collector is selected from aluminum foil.

In the positive electrode plate according to the first aspect of this application, a general formula of the lithium-rich manganese-based materials may be zLi₂MnO₃•(1-z)LiM'O₂, where 0≤z≤1, and M' is selected from one or more of Ni, Co, or Mn.

In the positive electrode plate according to the first aspect of this application, the ternary material Li₁₊ₘNiₐCo_{b}Me_{1-a-b}O₂₋ₙQₙ may be specifically selected from one or more of LiNi_{1/3}Co_{1/3}Mn_{1/3}O₂, LiNi_{0.5}Co_{0.2}Mn_{0.3}O₂, LiNi_{0.5}Co_{0.25}Mn_{0.25}O₂, LiNi_{0.55}Co_{0.15}Mn_{0.3}O₂, LiNi_{0.55}Co_{0.1}Mn_{0.35}O₂, LiNi_{0.55}Co_{0.05}Mn_{0.4}O₂, LiNi_{0.6}Co_{0.2}Mn_{0.2}O₂, LiNi_{0.75}Co_{0.1}Mn_{0.15}O₂, LiNi_{0.8}Co_{0.1}Mn_{0.1}O₂, LiNi_{0.85}Co_{0.05}Mn_{0.1}O₂, LiNi_{0.88}Co_{0.05}Mn_{0.07}O₂, LiNi_{0.9}Co_{0.05}Mn_{0.05}O₂, LiNi_{0.8}Co_{0.15}Al_{0.05}O₂, or LiNi_{0.8}Co_{0.15}Zr_{0.05}O₂.

In the positive electrode plate according to the first aspect of the present invention, in the ternary material Li₁₊ₘNiₐCo_{b}Me_{1-a-b}O₂₋ₙQₙ, optionally, 0.6≤a<1, 0<b≤0.4, and 0<1-a-b≤0.4. At the time, the lithium-ion battery can have both better nail penetration performance and higher energy density.

In the positive electrode plate according to the first aspect of this application, optionally, LiFe_{1-x-y}MnₓM_{y}PO₄ may be specifically selected from one or more of LiFePO₄, LiMnPO₄, or LiFeMnPO₄.

In the positive electrode plate according to the first aspect of this application, optionally, mass of the first positive electrode active material is 5% of total mass of the first positive electrode membrane.

In the positive electrode plate according to the first aspect of this application, the first positive electrode membrane further includes a first conductive agent and a first binder.

The first conductive agent and the first binder are not limited to any specific types, and may be selected as appropriate for the actual use. Optionally, the first conductive agent is selected from one or more of carbon black, acetylene black, SP carbon fiber, or acarbon nanotube; and the first binder is selected from one or more of polyvinylidene fluoride, polytetrafluoroethylene, or polyvinyl alcohol.

The first conductive agent and the first binder are also not limited to any specific amounts, and their amounts may be selected as appropriate for the actual use. Optionally, mass of the first binder is 1% of the total mass of the first positive electrode membrane, which can better strengthen bonding force between the first positive electrode membrane and the positive electrode current collector to further improve the nail penetration safety performance of the lithium-ion battery. Optionally, mass of the first conductive agent is above 2% of the total mass of the first positive electrode membrane.

In the positive electrode plate according to the first aspect of this application, optionally, mass of the second positive electrode active material is 97% of total mass of the second positive electrode membrane.

In the positive electrode plate according to the first aspect of this application, the second positive electrode membrane further includes a second conductive agent and a second binder.

The second conductive agent and the second binder are not limited to any specific types, and may be selected as appropriate for the actual use. Optionally, the second conductive agent is selected from one or more of carbon black, acetylene black, SP carbon fiber, or acarbon nanotube. Optionally, the second binder is selected from one or more of polyvinylidene fluoride, polytetrafluoroethylene, or polyvinyl alcohol.

The second conductive agent and the second binder are also not limited to any specific amounts, and their amounts may be selected as appropriate for the actual use. Optionally, mass of the second binder is above 1% of the total mass of the second positive electrode membrane. Optionally, mass of the second conductive agent is above 2% of the total mass of the second positive electrode membrane.

Next described is a lithium-ion battery according to a second aspect of this application.

The lithium-ion battery according to the second aspect of this application includes a positive electrode plate, a negative electrode plate, a separator and an electrolyte. The positive electrode plate is the positive electrode plate according to the first aspect of this application.

In the lithium-ion battery according to the second aspect of this application, the negative electrode plate may include a negative electrode current collector and a negative electrode membrane that is arranged on the negative electrode current collector and that includes a negative electrode active material, where the negative electrode membrane may be arranged on one surface of the negative electrode current collector, or on two surfaces of the negative electrode current collector.

The negative electrode active material is not limited to any specific type, and may be selected from one or more of graphite, soft carbon, hard carbon, mesocarbon microbeads, carbon fiber, acarbon nanotube, elemental silicon, silicon-oxygen compound, silicon-carbon composite, silicon alloy, elemental tin, tin oxide compound, or lithium titanate.

The negative electrode membrane may further include a conductive agent and a binder, where the conductive agent and the binder are not limited to any specific types or amounts, and may be selected as appropriate for the actual use.

The negative electrode current collector is also not limited to any specific type, and may be selected as appropriate for the actual use.

In the lithium-ion battery according to the second aspect of this application, the negative electrode plate may alternatively be lithium metal or lithium alloy.

In the lithium-ion battery according to the second aspect of this application, the separator is disposed between the positive electrode plate and the negative electrode plate to function as separation. The separator is not limited to any specific type, and may be, but is not limited to, any separator materials used in existing batteries, for example, polyethylene, polypropylene, polyvinylidene fluoride, and a multilayer composite film thereof.

In the lithium-ion battery according to the second aspect of this application, the electrolyte is not limited to any specific type, and may be a liquid electrolyte (also referred to as electrolyte solution), or a solid electrolyte. Optionally, the electrolyte is a liquid electrolyte. The liquid electrolyte may include an electrolytic salt and an organic solvent, where the electrolyte salt and the organic solvent are both not limited to any specific types, and may be selected as appropriate for the actual use. The electrolyte may further include an additive, where the additive is also not limited to any particular type, and may be a negative electrode film-forming additive, a positive electrode film-forming additive, or an additive that can improve specific performance of the battery, for example, an additive for improving overcharge performance of the battery, an additive for improving high-temperature performance of the battery, or an additive for improving low-temperature performance of the battery.

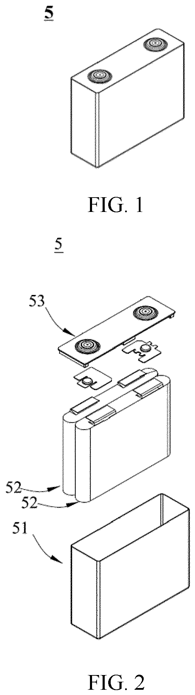

This application does not impose special limitations on a shape of the lithium-ion battery, and the lithium-ion battery may be cylindrical-shaped, square-shaped, or in any other shapes. FIG. 1 shows a lithium-ion battery 5 of a square structure as an example.

In some embodiments, the lithium-ion battery may include an outer package for encapsulating a positive electrode plate, a negative electrode plate, a separator, and an electrolyte.

In some embodiments, the outer package of the lithium-ion battery may be a soft package, for example, a soft bag. A material of the soft package may be plastic, for example, including one or more of polypropylene PP, polybutylene terephthalate PBT, polybutylene succinate PBS, or the like. Alternatively, the outer package of the lithium-ion battery may be a hard shell, for example, a hard plastic shell, an aluminum shell, or a steel shell.

In some embodiments, referring to FIG. 2, the outer package may include a housing 51 and a cover plate 53. The housing 51 may include a bottom plate and a side plate connected to the bottom plate. The bottom plate and the side plate enclose an accommodating cavity. The housing 51 has an opening communicating with the accommodating cavity, and the cover plate 53 can cover the opening to close the accommodating cavity.

The positive electrode plate, the negative electrode plate, and the separator may be wound or laminated to form a cell 52. The cell 52 is encapsulated in the accommodating cavity. The electrolyte infiltrates into the cell 52.

The lithium-ion battery 5 may include one or more cells 52, and their quantity may be adjusted as required.

In some embodiments, lithium-ion batteries may be combined to assemble a battery module, and the battery module may include a plurality of lithium-ion batteries. The specific quantity may be adjusted based on use and capacity of the battery module.

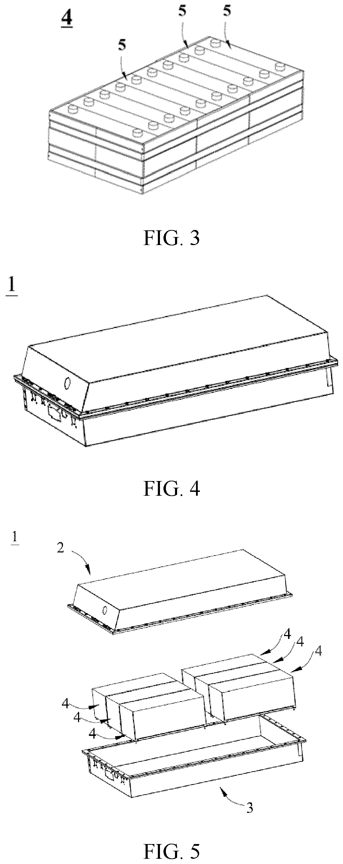

FIG. 3 shows a battery module 4 used as an example. Referring to FIG. 3, in the battery module 4, a plurality of lithium-ion batteries 5 may be sequentially arranged in a length direction of the battery module 4. Certainly, the plurality of lithium metal batteries 5 may be arranged in any other manner. Further, the plurality of lithium-ion batteries 5 may be fixed by using fasteners.

Optionally, the battery module 4 may further include a housing with an accommodating space, and the plurality of lithium-ion batteries 5 are accommodated in the accommodating space.

In some embodiments, such battery modules may be further combined to assemble a battery pack, and the quantity of battery modules included in the battery pack may be adjusted based on use and capacity of the battery pack.

FIG. 4 and FIG. 5 show a battery pack 1 used as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to enclose a space for accommodating the battery modules 4. The plurality of battery modules 4 may be arranged in the battery box in any manner.

A third aspect of this application further provides an apparatus, where the apparatus includes the lithium-ion battery described in this application. The lithium-ion battery may be used as a power source for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A lithium-ion battery, a battery module, or a battery pack may be selected for the apparatus based on requirements for use of the apparatus.

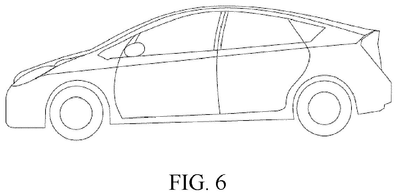

FIG. 6 shows an apparatus used as an example. The apparatus is a battery electric vehicle, a hybrid electric vehicle, a plug-in hybrid electric vehicle, or the like. To meet requirements of the apparatus for high power and high energy density of the battery, a battery pack or a battery module may be used.

In another example, the apparatus may be a mobile phone, a tablet computer, a notebook computer, or the like. Such apparatus is generally required to be light and thin, and may use a lithium-ion battery as its power source.

This application is further described with reference to examples. It should be understood that these examples are merely used to describe this application but not to limit the scope of this application.

Lithium-ion batteries in Examples 1 to 8 and Comparative Examples 1 and 2 were prepared according to the following method.

### (1) Preparation of a positive electrode plate

A first positive electrode active material, a first conductive agent, and a first binder shown in Table 1 were mixed at ratio in an organic solvent N-methylpyrrolidone (NMP) to prepare a uniform first positive electrode slurry. Then the first positive electrode slurry was evenly applied on one surface of a positive electrode current collector shown in Table 1, and dried to obtain a first positive electrode membrane. A second positive electrode active material, a second conductive agent, and a second binder shown in Table 2 were mixed at ratio in an organic solvent N-methylpyrrolidone (NMP) to prepare a uniform second positive electrode slurry. Then the second positive electrode slurry was evenly applied on the first positive electrode membrane, and dried to obtain a second positive electrode membrane.

Then the same operations were performed on the other surface of the positive electrode current collector, followed by cold pressing and slitting to obtain a positive electrode plate.

### (2) Preparation of a negative electrode plate

A negative electrode active material artificial graphite, a binder styrene-butadiene rubber emulsion (SBR), and a conductive agent conductive carbon black were mixed at a mass ratio of 90:5:5 in deionized water as solvent to prepare a uniform negative electrode slurry. Then the negative electrode slurry was applied on two surfaces of a copper foil of a negative electrode current collector, and dried to obtain a negative electrode membrane, followed by cold pressing and slitting to obtain a negative electrode plate.

### (3) Preparation of an electrolyte

In an argon atmosphere glove box (where H₂O<0.1ppm, and O₂<0.1ppm), ethylene carbonate (EC), ethyl methyl carbonate (EMC), and diethyl carbonate (DEC) were mixed at a volume ratio of 1:1:1 to obtain an organic solvent. Fully dried LiPF₆ was then dissolved in the mixed organic solvent to prepare an electrolyte with a concentration of 1mol/L.

### (4) Preparation of a separator

A conventional polypropylene (PP) film was used as a separator.

### (5) Preparation of a lithium-ion battery

The positive electrode plate, the separator, and the negative electrode plate were stacked in order, so that the separator was sandwiched between the positive and negative electrode plates to function as a separation. Then the stack was wound to obtain a bare cell. The bare cell was placed into a battery housing. Then the electrolyte was injected into the battery housing. After steps including formation and standing, a lithium-ion battery was obtained.

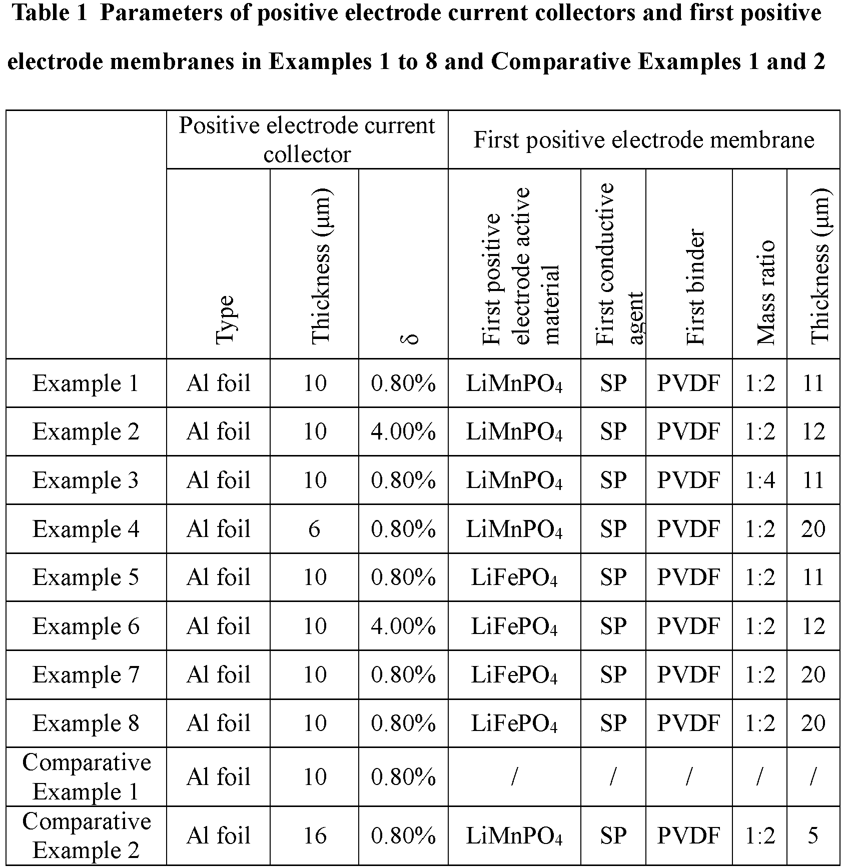

**Table 2 Parameters of positive electrode current collectors and second positive electrode membranes in Examples 1 to 8 and Comparative Examples 1 and 2**

| | Second positive electrode membrane | | | | |
|---|---|---|---|---|---|
| | Second positive electrode active material | First conductive agent | First binder | Mass ratio | Thickness (µm) |
| Example 1 | LiNi_{0.5}Co_{0.2}Mn_{0.3}O₂ | SP | PVDF | 2:1 | 120 |
| Example 2 | LiNi_{0.5}Co_{0.2}Mn_{0.3}O₂ | SP | PVDF | 2:1 | 120 |
| Example 3 | LiNi_{0.5}Co_{0.2}Mn_{0.3}O₂ | SP | PVDF | 2:1 | 120 |
| Example 4 | LiNi_{0.8}Co_{0.1}Mn_{0.1}O₂ | SP | PVDF | 2:1 | 120 |
| Example 5 | LiMn₂O₄ | SP | PVDF | 2:1 | 120 |
| Example 6 | LiMn₂O₄ | SP | PVDF | 2:1 | 120 |
| Example 7 | LiNi_{0.8}Co_{0.15}Al_{0.05}O₂ | SP | PVDF | 2:1 | 120 |
| Example 8 | LiNi_{0.8}Co_{0.15}Zr_{0.05}O₂ | SP | PVDF | 2:1 | 120 |
| Comparative Example 1 | LiNi_{0.5}Co_{0.2}Mn_{0.3}O₂ | SP | PVDF | 2:1 | 120 |
| Comparative Example 2 | LiNi_{0.8}Co_{0.1}Mn_{0.1}O₂ | SP | PVDF | 2:1 | 120 |

Next described is a test procedure for the lithium-ion battery.

### Nail penetration safety performance test for the lithium-ion battery

The lithium-ion battery was first fully charged, then a high-temperature resistant steel needle with diameter Φ of 1mm and a high-temperature resistant steel needle with diameter Φ of 3mm (cone angle of the needle tip was 45° to 60°, and the steel needle had a smooth surface clear of any rust, oxide layer, or oil stain) were used separately to penetrate the lithium-ion battery at a speed of (25±5) mm/s in a direction perpendicular to the lithium-ion battery electrode plate, where the penetration position was preferably close to the geometric center of the punctured surface. The lithium-ion battery was observed for 1h with the steel needle staying in it. Under the condition that no burning or explosion was found, the lithium-ion battery was deemed to pass the nail penetration test.

**Table 3 Performance test results of Examples 1 to 8 and Comparative Examples 1 and 2**

| | Test result | |
|---|---|---|
| | Nail penetration test, specification: Φ=1mm | Nail penetration test, specification: Φ=3mm |
| Example 1 | Smoke, no spark | Spark, no burning |
| Example 2 | Smoke, no spark | Smoke, no spark |
| Example 3 | Smoke, no spark | Smoke, no spark |
| Example 4 | Smoke, no spark | Smoke, no spark |
| Example 5 | Smoke, no spark | Spark, no burning |
| Example 6 | Smoke, no spark | Smoke, no spark |
| Example 7 | Smoke, no spark | Smoke, no spark |
| Example 8 | Smoke, no spark | Smoke, no spark |
| Comparative Example 1 | Burning | Burning |
| Comparative Example 2 | Burning | Burning |

It can be seen from the test results in Table 3 that the lithium-ion batteries of Examples 1 to 8 had no burning or explosion in the nail penetration test, proving that those lithium-ion batteries had great nail penetration safety performance. In the case of the steel needle with diameter Φ of 1mm, the lithium-ion battery smoked after nail penetration but without spark or burning. In the case of the steel needle with diameter of 3mm, the lithium-ion battery sparked after nail penetration. This was because the steel needle damaged a larger area in the nail penetration process, and the probability of internal short circuit of the lithium-ion battery was higher, leading to a temperature rise at a needle penetrated site and in turn severer gas production in the lithium-ion battery. When the gas accumulated to a critical amount, pressure inside the lithium-ion battery increased to break an explosion-proof valve. High-temperature gas would spark when encountering oxygen in the air, but the lithium-ion battery would not burn or explode because of protection of the first positive electrode membrane.

In Comparative Example 1, the lithium-ion battery exploded immediately at the moment of the nail penetration, because the positive electrode plate was lack of the protection of the first positive electrode membrane. In Comparative Example 2, although the positive electrode plate was protected by the first positive electrode membrane, the thickness of the positive electrode membrane was less than the thickness of the positive electrode current collector. As a result, it was not effective to prevent the contact between metal fins near the needle penetrated site and the negative electrode active material in the nail penetration process. The lithium-ion battery would generate a large amount of heat at the moment of nail penetration due to short circuit, which resulted in burning.

From the above, it is obvious that the positive electrode plate in this application can allow the lithium-ion battery to have not only high energy density but also good nail penetration safety performance.

In conclusion, it should be noted that the embodiment are merely intended for describing the technical solutions of this application but not for limiting this application. Although this application is described in detail with reference to such embodiments, persons of ordinary skill in the art should understand that they may still make modifications to the technical solutions described in the embodiments or make equivalent replacements to some or all technical features thereof, without departing from the scope of the technical solutions of the embodiments of this application.

## Claims

1. A positive electrode plate, wherein the positive electrode plate comprises a positive electrode current collector, a first positive electrode membrane, and a second positive electrode membrane; wherein
the first positive electrode membrane is arranged on the positive electrode current collector and comprises a first positive electrode active material, and the first positive electrode active material is selected from one or more of phosphate materials LiFe_{1-x-y}MnₓM_{y}PO₄, wherein 0≤x≤1, 0≤y≤0.1, 0≤x+y≤1, and M is selected from one or more of Cr, Mg, Ti, Al, Zn, W, Nb, or Zr;
the second positive electrode membrane is arranged on the first positive electrode membrane and comprises a second positive electrode active material, gram capacity of the second positive electrode active material is greater than gram capacity of the first positive electrode active material, and the second positive electrode active material is different from the first positive electrode active material; and
thickness DO of the positive electrode current collector is less than or equal to thickness D1 of the first positive electrode membrane.

2. The positive electrode plate according to claim 1, wherein
the thickness D1 of the first positive electrode membrane satisfies 6µm≤D1≤21µm; and
thickness D2 of the second positive electrode membrane satisfies 50µm≤D2≤200µm.

3. The positive electrode plate according to claim 1 or 2, wherein the thickness D1 of the first positive electrode membrane and the thickness D2 of the second positive electrode membrane satisfy a relationship 70µm≤D2-D1≤170µm.

4. The positive electrode plate according to any one of claims 1 to 3, wherein the thickness DO of the positive electrode current collector satisfies 5µm≤D0≤20µm.

5. The positive electrode plate according to any one of claims 1 to 4, wherein elongation at break 8 of the positive electrode current collector satisfies 0.8%≤δ≤4%.

6. The positive electrode plate according to claim 5, wherein the thickness DO of the positive electrode current collector and the thickness D1 of the first positive electrode membrane satisfy a relationship D1≥(1+δ)×D0.

7. The positive electrode plate according to any one of claims 1 to 6, wherein mass of the first positive electrode active material is 5% of total mass of the first positive electrode membrane.

8. The positive electrode plate according to any one of claims 1 to 7, wherein the first positive electrode membrane further comprises a first conductive agent and a first binder, wherein mass of the first binder is above 1% of total mass of the first positive electrode membrane, and mass of the first conductive agent is above 2% of the total mass of the first positive electrode membrane.

9. The positive electrode plate according to any one of claims 1 to 8, wherein the first positive electrode membrane is arranged on one or two surfaces of the positive electrode current collector.

10. The positive electrode plate according to any one of claims 1 to 9, wherein the first positive electrode membrane is arranged on two surfaces of the positive electrode current collector.

11. The positive electrode plate according to any one of claims 1 to 10, wherein mass of the second positive electrode active material is 97% of total mass of the second positive electrode membrane.

12. The positive electrode plate according to any one of claims 1 to 11, wherein the second positive electrode membrane further comprises a second conductive agent and a second binder, wherein mass of the second binder is above 1% of total mass of the second positive electrode membrane, and mass of the second conductive agent is above 2% of the total mass of the second positive electrode membrane.

13. The positive electrode plate according to any one of claims 1 to 12, wherein the second positive electrode active material is selected from one or more of lithium manganate oxide, lithium-rich manganese-based materials, or ternary materials Li₁₊ₘNiₐCo_{b}Me_{1-a-b}O₂₋ₙQₙ, wherein -0.1≤m≤0.2, 0<a<1, 0<b<1, 0<1-a-b<1, 0≤n≤0.1, Me is selected from one or more of Mn, Al, Mg, Zn, Ga, Ba, Fe, Cr, Sn, V, Sc, Ti, Zr, Sb, W, or Mo, and Q is selected from one or more of F, Cl, or S.

14. The positive electrode plate according to claim 13, wherein 0.6≤a<1, 0<b≤0.4, and 0<1+a-b≤0.4.

15. A lithium-ion battery, wherein the lithium-ion battery comprises the positive electrode plate according to any one of claims 1 to 14.

16. An apparatus, wherein a power source or storage source of the apparatus is the lithium-ion battery according to claim 15.
